# EUROPEAN PATENT SPECIFICATION

(11) **EP 1 371 960 B1**
(45) Date of publication and mention of the grant of the patent: **08.08.2007**
(21) Application number: 03012773.2
(22) Date of filing: 05.06.2003
(51) Int. Cl.: G01L 1/24, G01M 1/24

(54) **Dynamic balance testing machine**
Maschine zum Testen des dynamischen Gleichgewichts
Machine pour tester l'équilibre dynamique

(30) Priority: 13.06.2002 JP 2002172999
(43) Date of publication of application: 17.12.2003
(73) Proprietor: NAGAHAMA SEISAKUSHO LTD., Takatsuki, Osaka (JP)
(72) Inventor: Kyogoku, Yoshiaki, Takatsuki, Osaka (JP)
(74) Representative: Haar, Lucas Heinz Jörn

(56) References cited:
- EP-A- 1 134 569
- DE-A- 4 334 244
- US-A- 3 871 234

## Description

The present invention relates to a dynamic balance testing machine, and especially to a dynamic balance testing machine for measuring an unbalance of an asymmetrical crank shaft.

Crank shafts constituting a main part of an internal combustion engine include so-called asymmetrical crank shafts. Typical asymmetrical crank shafts are, e.g. crank shafts of 3-cylinder or 6-cylinder V-type engines. The weight distribution of such an asymmetrical crank shaft is not symmetrical relative to its rotational axial center and an asymmetrical crank shaft as a single body has a moment (which is called a free moment) due to its predetermined dynamic unbalance. In case of measuring a rotational unbalance of such an asymmetrical crank shaft, it is necessary to resourcefully treat the above-mentioned free moment, because a large vibration is occurred due to the free moment.

To say in more detail, it is unsatisfactory to correct a rotational unbalance of an asymmetrical crank shaft as a single body, but it is necessary to correct a rotational unbalance of an asymmetrical crank shaft fitted with a piston and a connecting rod. Therefore, the following method for correcting a rotational unbalance of an asymmetrical crank shaft has been proposed.

Before measuring a rotational unbalance of an asymmetrical crank shaft, a free moment is compensated by attaching a dummy weight to each crank pin of the crank shaft, the dummy weight having the same weight as the weight of a connecting rod and a piston to be fitted to the crank pin.

However, according to this method, attaching and removing the dummy weight is often manually carried out, and automatizing thereof is difficult. In addition, if an automatic dummy weight attaching and removing device is to produce, such a device has a disadvantage in its complicated structure and will be very expensive as a whole. Further, attaching and removing of the dummy weight takes much time, and therefore this method has also the disadvantage that the measurement time of a rotational unbalance of one crank shaft, so-called a cycle time, becomes long.

In this respect, a device has been proposed in which a crank shaft as a test piece and a dummy shaft having a dummy weight are rotatably fitted to a vibration cradle and are mechanically connected to a rotational driving device, and by synchronously rotating the crank shaft and the dummy shaft, a free moment of the crank shaft is cancelled out by a free moment of the dummy shaft (for example, Japanese Unexamined Patent Publication No. 7-306112 (1995), paragraph [0005]). With such arrangements, since the free moment of the crank shaft is cancelled out by the rotation of the dummy shaft, the rotational unbalance of the crank shaft can be suitably measured without being hindered by the free moment of the crank shaft.

However, this prior art has the problem that, since the dummy shaft is mechanically connected to the rotational driving device of the crank shaft, much time is required for adjusting pulleys, gears and the like in the mechanical connecting portion and variations in precision, accuracy, weight distribution and the like of the parts in the connecting portion tend to affect the measurement accuracy. In addition, this device has the problem that it is difficult to change the set-up of the device when an unbalance of each of plural crank shafts with many kinds are measured.

In US-A-3 871 234 a dynamic balancing machine for balancing engine crank shafts is disclosed, comprising components to simulate imbalancing effects to which the crank shaft will be subjected in use, and means for adjusting the axial position of at least one of the imbalance simulating components to allow the machine to be used on different types of crank shaft with rapid convertibility. The imbalance simulating components are mechanically coupled to the crank shaft by a drive catch in order to be driven synchronously with the crank shaft.

Another dynamic balancing machine of the known type is disclosed in DE-A-4 334 244. In this balancing machine imbalance simulating components are arranged at an adjusting sleeve which can be coupled to the crank shaft in different angular positions for adjusting the simulated imbalance effect to different types of crank shaft.

In a further example of prior art, it has been proposed that a crank shaft as a test piece is rotated, and a synthesized vibration due to a free moment of the crank shaft and a vibration due to an unbalance of the crank shaft to be corrected is measured, and the vibration due to the free moment is electrically treated and removed (For example, Japanese Unexamined Patent Publication No. 2001-255227 or EP 1 134 569 A2).

However, this art has a problem that, since the free moment of the crank shaft is several ten times to several hundred times as large as the unbalance of the crank shaft to be measured, and removing the vibration due to such a large free moment by electrical compensation results in lowering in the measurement accuracy. Further, there is another problem that calibration (revision) has to often be carried out in order to use such a device for a long time.

A main object of the present invention is to solve the problems of the above-mentioned prior art and to provide a dynamic balance testing machine capable of easily changing the set-up of the machine corresponding to variations of kinds and shapes of the crank shaft of which unbalance is measured. Another object of the present invention is to provide a dynamic balance testing machine provided with mechanical arrangements for cancelling out a free moment of an asymmetrical crank shaft, capable of accurately measuring a rotational unbalance of the asymmetrical crank shaft.

The invention according to claim 1 is a dynamic balance testing machine comprising: a vibration cradle provided in such a manner that the cradle can be vibrated corresponding to the unbalance when an unbalance of a test piece is measured, a test piece driving device provided in the vibration cradle and having a rotation shaft for rotating the test piece of which unbalance is measured, a compensation rotational shaft provided in the vibration cradle, having a rotational shaft positioning on the same line or on a line parallel to the rotational axial center of the test piece, and having a compensation weight provided for the rotational shaft, wherein the compensation weight is adapted to generate when rotated by the rotational shaft a vibration for cancelling out the vibration generated in the cradle at rotation of the test piece, due to a predetermined unbalance of the test piece, and a compensation rotational shaft driving means provided for the vibration cradle for rotating the compensation rotational shaft in such a manner that the test piece and the compensation rotational shaft are synchronously rotated, and wherein the test piece driving device and the compensation rotational shaft driving means which is separate from the test piece driving device are attached to the vibration cradle, and a synchronous control circuit is provided for controlling the compensation rotational shaft driving means such that its rotational speed and its rotational phase coincide with those of the test piece.

The invention as set forth in claim 2 is a dynamic balance testing machine according to claim 1, wherein the test piece driving device is applicable to rotate plural test pieces of different kinds or shapes for measuring the unbalance thereof, the compensation rotational shaft has plural compensation rotational shafts corresponding to the kinds or shapes of the test pieces of which unbalance is measured, and the compensation rotational shaft driving means is applicable to selectively rotate one of the plural compensation rotational shafts, corresponding to a test piece of which unbalance is measured.

The invention as set forth in claim 3 is a dynamic balance testing machine according to claim 2, wherein the compensation rotational shaft driving means has driving means separately provided for each compensation rotational shaft. The invention as set forth in claim 4 is a dynamic balance testing machine according to any one of claims 1 to 3, comprising means for outputting a reference signal every time when a predetermined portion of the test piece went through one-rotation carried out by the test piece driving means, wherein the compensation rotational shaft driving means is controllable based on the reference signal for rotating the compensation rotational shaft synchronously with the reference signal.

The invention as set forth in claim 5 is a dynamic balance testing machine according to claim 4, wherein the test piece is a crank shaft, and the reference signal outputting means comprises an optical sensor for outputting a sensor light intersecting the rotational locus of a crank pin of the crank shaft to output a reference signal based on the interruption of the sensor light caused by the rotating crank pin.

The invention as set forth in claim 6 is a dynamic balance testing machine according to claim 5, wherein the reference signal outputting means is operable to output, as the reference signal, the midst interruption of a duration in which the sensor light is interrupted by the crank pin.

According the invention of claim 1, since the compensation rotational shaft and the compensation rotational shaft driving means are mechanically separated from the test piece driving means, the compensation rotational shaft can be disposed in such a position that the set-up of the machine can be easily changed. Thereby, even in a case where the only one compensation rotational shaft is provided, the machine can treat plural test pieces of different kinds or shapes by changing a compensation weight to be mounted on the compensation rotational shaft.

Further, according to the invention of claims 2 and 3, plural compensation rotational shafts are provided corresponding to the kinds or shapes of test pieces of which unbalance is measured. Therefore, by selectively rotating one of the plural compensation rotational shafts corresponding to a test piece, the free moment of the test piece can be canceled out by the rotation of the compensation rotational shaft. And in a case where the kind of a test piece changes, it is only necessary to select a compensation rotational shaft corresponding to the kind and rotate the same. Therefore, the dynamic balance testing machine is such that the set-up of the machine can easily be changed corresponding to the kind of each test piece.

Plural kinds of compensation rotational shafts are provided corresponding to the kinds or the shapes of test pieces. However, for driving these compensation rotational shafts, only a single driving means may be provided or a corresponding number of driving means may be provided for each of the compensation rotational shafts. In a case where only a single driving means is provided and the driving means includes a motor, the motor shaft may project both forward and rearward and compensation rotational shafts may be provided at forward and backward of the motor via clutches, respectively. In this case, by changing over the clutch, two kinds of compensation rotational shafts can be selectively rotated.

Further, such arrangements may be adopted that the driving force of the compensation rotational shaft driving means is selectively transmitted through the clutches, pulleys or the like to the plural compensation rotational shafts.

Furthermore, the compensation rotational shaft driving means may be provided for each compensation rotational shaft as according to the arrangement of claim 3.

According to the arrangements of claim 4, the rotation of a test piece rotated by the test piece driving means can be accurately detected and the compensation rotational shaft can be synchronously rotated with the rotation of the test piece.

Especially, in a case where the test piece is a crank shaft, it is preferable, in view of reliability of the machine, that the rotational position of a crank pin contained in the crank shaft is detected by an optical sensor and the compensation rotational shaft is synchronously rotated with the rotation of the crank shaft based on an output of the optical sensor, as according to claim 5.

Further, as according to claim 6, in a case where the midst of a duration in which the sensor light is interrupted by the crank pin is utilized as a reference signal, the unbalance of the test piece can be measured without being influenced by variations in size of the crank pin or the difference in size toward half-diameter from the rotational axial center of the crank pin, so that the reliability of the machine is raised.

According to the present invention having the above-mentioned arrangements, an unbalance of especially an asymmetrical crank shaft can be measured accurately. In addition, such a dynamic balance testing machine can be provided that the set-up of the machine can easily be changed.

Embodiments of the present invention will be described in detail in the following with reference to the appended drawings, wherein:
Fig. 1 is a diagram illustrating a configuration of a dynamic balance testing machine according to an embodiment of the present invention.
Fig. 2 is a diagram for illustrating a function of the dynamic balance testing machine having the configuration shown in Fig. 1.
Fig. 3 is a block diagram showing the control circuit configuration of a synchronous motor in the dynamic balance testing machine shown in Fig. 1.
Fig. 4 is a diagram showing a relation between the arrangement of an optical sensor and a crank pin.
Fig. 5 is a chart for representing output pulses from an optical sensor 18 (light receiving element 14) corresponding to Fig. 4.
Fig. 6 is a conceptual view illustrating a configuration of a dynamic balance testing machine according to another embodiment of the present invention.

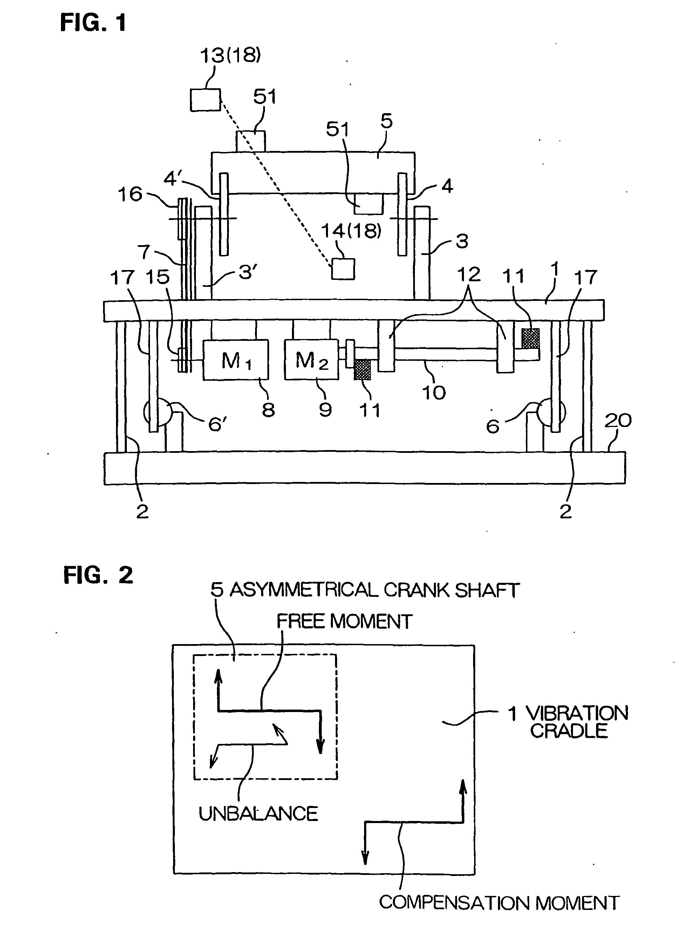

Referring to Fig. 1, in a dynamic balance testing machine according to this embodiment, a vibration cradle 1 is held by, for example, four supporting springs 2 vertically set up on a base 20 so as to be vibrated. That is, the vibration cradle 1 is provided in such a manner that it can be vibrated depending on the unbalance amount of a test piece when it is measured. On the vibration cradle 1, a pair of supports 3, 3' are vertically set up. The supports 3, 3' rotatably support a pair of bearing rollers 4, 4', respectively. With two pairs of bearing supports 4, 4', an asymmetrical crank shaft 5 as a test piece is supported at the both ends thereof.

A drive motor 8 is provided, for example, on the lower surface of the vibration cradle 1. The rotational force of the drive motor 8 is transmitted to one bearing roller pair 4' by a pulley 15, a driving belt 7 and a pulley 16. In other words, the bearing roller pair 4' is rotated by the drive motor 8. With the rotation of the bearing roller pair 4', the asymmetrical crank shaft 5 mounted thereon is rotated. Since the other end of the asymmetrical crank shaft 5 is received by the other bearing roller pair 4, the asymmetrical crank shaft 5 rotates on the two sets of bearing roller pairs 4, 4' with the rotation of the bearing roller pair 4'.

In a case where the rotating asymmetrical crank shaft 5 has an unbalance, the vibration cradle 1 is vibrated in a predetermined amount corresponding to the amount and angle of the unbalance. Detection of the vibration of the vibration cradle 1 is realized by that vibration detectors 6, 6' provided on the base 20 detect the vibration of detecting rods 17, 17' which are fixed to, for example, the lower surface of the vibration cradle 1 and extending downwardly therefrom.

Further, in this embodiment, a pair of bearings 12 are attached to, e.g., the lower surface of the vibration cradle 1, and a compensation rotational shaft 10 is rotatably held by the pair of bearings 12. The compensation rotational shaft 10 is disposed in such a manner that its rotational axial center is parallel to the rotational axial center of the asymmetrical crank shaft 5 received by the bearing roller pairs 4, 4'. Attached to this compensation rotational shaft 10 are compensation weights 11, which can generate a moment cancelling out the free moment of the asymmetrical crank shaft 5.

Further, a motor 9 is provided to the lower surface of the vibration cradle 1 and the rotational shaft of the motor 9 is connected to the compensation rotational shaft 10 so that the compensation rotational shaft 10 is rotated by the motor 9.

Furthermore, an optical sensor 18 is provided which has a light emitting element 13 and a light receiving element 14 for outputting a reference signal every one-time rotation of a predetermined crank pin 51 of the asymmetrical crank shaft 5 received by the two sets of bearing roller pairs 4, 4'.

As mentioned below, the rotational speed and the rotational phase of the motor 9 are controlled based on a reference signal outputted from the optical sensor 18.

Fig. 2 illustrates a function of the dynamic balance testing machine having the configuration shown in Fig. 1. In Fig. 2, the relation among the free moment generated by the rotation of the asymmetrical crank shaft 5, the unbalance amount and the compensation moment generated by the rotation of the compensation rotational shaft 10 is illustrated in Fig. 2 showing the vibration cradle 1 in plan.

The asymmetrical crank shaft 5 as a single body has a large moment, namely, a free moment as mentioned above. This free moment depends upon the basic shape of the asymmetrical crank shaft 5, and in a case where the asymmetrical crank shaft 5 is incorporated into an internal combustion engine and a connecting rod and a piston are fitted to a crank pin of the asymmetrical crank shaft 5, the free moment is cancelled by the weights of the connecting rod and the piston. The asymmetrical crank shaft 5 has, in addition to the free moment, an unbalance to be measured by unbalance measurement and to be removed by unbalance correction. In many cases, such an unbalance to be corrected is much smaller than the free moment.

When the compensation rotational shaft 10 is rotated by the motor 9, a compensation moment is generated due to the function of the compensation weights 11 attached to the compensation rotational shaft 10. When the motor 9 is so controlled that the rotational speed of the compensation rotational shaft 10 becomes equal to that of the asymmetrical crank shaft 5 and the rotational phase of the compensation rotational shaft 10 coincides with that of the asymmetrical crank shaft 5, the compensation moment becomes a moment as large as the free moment and having the reverse direction to the direction of the free moment. Therefore, the vibration based on the free moment and the vibration based on the compensation moment are offset to each other, and any vibration of the vibration cradle 1 is not generated based on the free moment. As a result, the vibration cradle 1 has vibration only due to an unbalance of the asymmetrical crank shaft which is to be corrected.

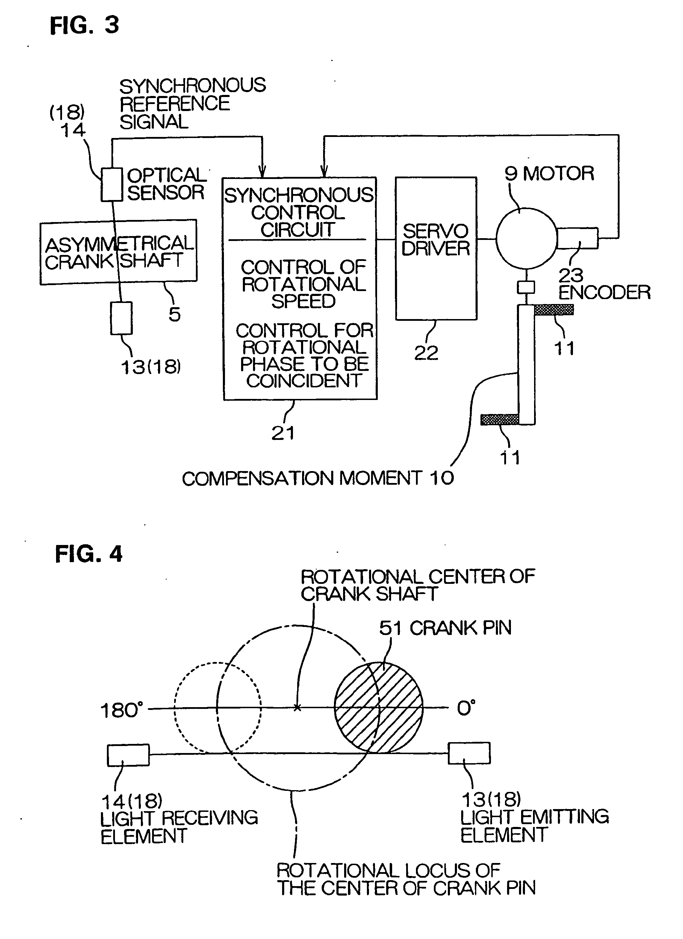

Fig. 3 is a block diagram of the control circuit configuration of the motor 9 in the dynamic balance testing machine shown in Fig. 1. As above-mentioned, the rotational state of the predetermined crank pin 51 (not shown in Fig. 3) of the asymmetrical crank shaft 5 is detected by the optical sensor 18, and a reference signal for synchronous rotation from the optical sensor 18 is given to a synchronous control circuit 21 every one-time rotation of the crank pin 51, namely, of the asymmetrical crank shaft 5. On the other hand, the compensation rotational shaft 10 is, for example, directly connected to the motor 9, so that the compensation rotational shaft 10 is rotated once with one-time rotation of the motor 9. The motor 9 is provided with an encoder 23, by which the rotational state of the motor 9 is detected and given to the rotational control circuit 21.

In the rotational control circuit 21, the signal indicating the rotational state of the motor 9 from the encoder 23 is compared with the reference signal from the optical sensor 18, and a control signal having the rotational speed and the rotational phase of the motor 9 coincident with those of the asymmetrical crank shaft 5 is generated, and is given to a servo driver 22. Then, the rotation of the motor 9 is controlled by the servo driver 22.

Thereby, the motor 9 and the asymmetrical crank shaft 5 are rotated at the same rotational speed and in the same rotational phase to each other, and the compensation rotational shaft 10 directly connected to the motor 9 and the asymmetrical crank shaft 5 are also rotated at the same rotational speed and in the same rotational phase to each other.

As a result, a compensation moment for cancelling out the free moment of the asymmetrical crank shaft 5 is generated by the rotation of the compensation rotational shaft 10.

Fig. 4 illustrates the relation between the arrangement of the optical sensor 18 (the light emitting element 13 and the light receiving element 14) and a crank pin 51. In the optical sensor 18 having the light emitting element 13 and the light receiving element 14, sensor light (sensor beam) goes straight ahead from the light emitting element 13 to the light receiving element 14. The sensor light is so emitted as to intersect the rotational locus of the crank pin 51. That is, the positions of the light emitting element 13 and the light receiving element 14 are arranged in such a manner that the sensor light going straight ahead from the light emitting element 13 to the light receiving element 14 can intersect the rotational locus of the crank pin 51.

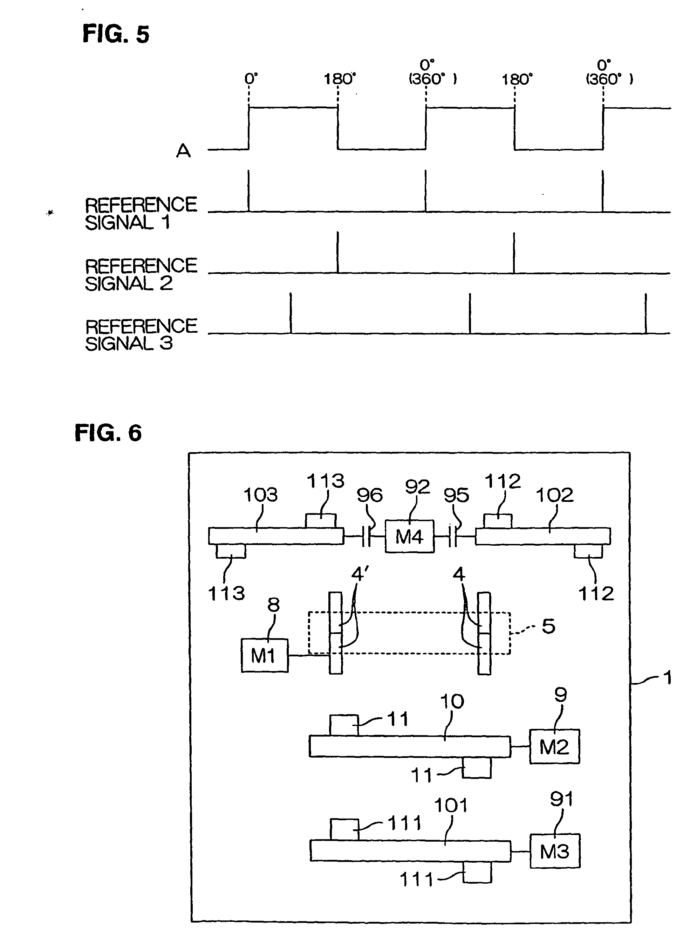

In Fig. 4, the sensor light projected from the light emitting element 13 to the light receiving element 14 is positioned aside the rotational center of the crank shaft 5 in such a manner that it can intersect the rotational locus of the center of the crank pin 51. Thereby, the sensor light is interrupted once during one-time rotation of the crank pin 51. In more detail, in the case shown in Fig.4, the sensor light is not interrupted while the crank pin 51 is in the range from 0°to 180° but is interrupted while it is in the range from 180°to 360°(0°). Therefore, the output from the light receiving element 14 is a pulse signal shown with designation A in Fig. 5.

However, the above-mentioned angle is only an example, and the value of the angle changes with the diameter of the crank pin 51, the arrangement of the optical sensor 18 and the like.

In the case shown in Figs. 4 and 5, since one pulse is outputted every one-time rotation of the crank pin 51, the rise (reference signal 1), the decay (reference signal 2) or the center (reference signal 3) of the pulse can be obtained as a reference signal.

In the above-mentioned case, in order to obtain the center of the pulse (reference signal 3) as a reference signal, it is only necessary to measure the time from the rise to the decay of the pulse by a clock and recognize the midst of that time as the center of the pulse. The recognized center of the pulse is successively used as a reference signal for control. If a reference signal is obtained based on the center of the pulse, in other words, based on the time at when the center of the crank pin 51 interrupts the sensor light, it has an advantage that minute errors in the diameter of the crank pin 51 can be absorbed, that minute differences in the arm length of the crank pin 51 (the length from the rotational center of the crank shaft to the center of the crank pin 51), if any, can be absorbed and so on.

In the above-mentioned embodiment, the optical sensor 18 comprises the light emitting element 13 and the light receiving element 14, but a reflection-type optical sensor may be used, instead. Further, instead of the optical sensor, another arrangement may be adopted in which a reference signal is outputted by a proximity switch or the like. It is only necessary to adopt such an arrangement that the sensor light is interrupted once during one-time rotation of the crank pin, or such a disposition and an arrangement of the sensor that one signal is outputted with one-time rotation of the crank pin.

In the above-mentioned embodiment, it has been described that, since the asymmetrical crank shaft 5 is provided on the upper side relative to the vibration cradle 1 with the compensation rotational shaft 10 being provided on the lower side relative thereto, the asymmetrical crank shaft 5 and the compensation rotational shaft 10 are controlled so as to be rotated in the same rotational phase. However, in a case where the asymmetrical crank shaft 5 and the compensation rotational shaft 10 are both provided on the upper surface of the vibration cradle 1, it is only necessary to control the asymmetrical crank shaft 5 and the compensation rotational shaft 10 to have the reverse rotational phase to each other, or they are rotated in the reverse directions to each other. In other words, it is only necessary to control the rotational speed and the rotational phase of the compensation rotational shaft 10 in such a manner that the free moment generated by the asymmetrical crank shaft 5 can be offset with the compensation moment generated by the compensation rotational shaft 10.

Fig. 6 is a conceptual view showing the configuration of a dynamic balance testing machine according to another embodiment of the present invention, in which the vibration cradle 1 is illustrated in plan. Similarly in the above-mentioned embodiment, the vibration cradle 1 is provided with a bearing roller pair 4' driven by a drive motor 8 and another bearing roller pair 4 to be a set together with the bearing roller pair 4'. An asymmetrical crank shaft 5 as a test piece is received and rotated by the two bearing roller pairs 4, 4'.

The vibration cradle 1 is further provided with a compensation rotational shaft 10 rotated by a synchronous motor 9, similarly to the above-mentioned embodiment. Compensation weights 11 are attached to this compensation rotational shaft 10.

Further, in this embodiment, a synchronous motor 91 and a compensation rotational shaft 101 to be rotated by the synchronous motor 91 are provided. Compensation weights 111 are attached to this compensation rotational shaft 101. Further, a synchronous motor 92 is provided. The synchronous motor 92 is a so-called double projection motor in which a motor shaft projects both forward and backward. Connected to these two projections of the synchronous motor 92 are compensation rotational shafts 102, 103 via clutches 95, 95, respectively. A compensation weight 112 is attached to the compensation rotational shaft 102, while a compensation weight 113 is attached to the compensation rotational shaft 103.

In these arrangements, each of the compensation rotational shafts 10, 101, 102, 103 is disposed so as to extend on an axial line in parallel to the rotational axis of the asymmetrical crank shaft 5 received and rotated by the bearing roller pairs 4, 4' .

Further, each lengths of the compensation rotational shafts 10, 101, 102, 103 and the numbers and the weights of the compensation weights 11, 111, 112, 113 are set to such a value as capable of offsetting a free moment of a predetermined type asymmetrical crank shaft of which unbalance is measured.

With such arrangements, the compensation rotational shafts 10, 101, 102, 103 are not rotated and no compensation moment is generated as long as the synchronous motors 9, 91, 92 are not driven. Therefore, by selecting one of the compensation rotational shafts to be operated on the based of kind or shape of the asymmetrical crank shaft 5 as a test piece, the dynamic balance testing machine can easily change its arrangement in order to measure the unbalance of plural asymmetrical crank shafts of different kinds. For example, for measurement of the unbalance of the first kind of asymmetrical crank shaft 5, the compensation rotational shaft 10 is rotated by the synchronous motor 9. Further, for measurement of the unbalance of the second kind of asymmetrical crank shaft, the compensation rotational shaft 101 is rotated by the synchronous motor 91. Further, for measurement of the unbalance of the third kind of asymmetrical crank shaft, the compensation rotational shaft 102 is rotated by the synchronous motor 92 via a clutch 95. Furthermore, for measurement of the unbalance of the fourth kind of asymmetrical crank shaft, the synchronous motor 92 is rotated and only the clutch 96 is connected to rotate the compensation rotational shaft 103.

As above-mentioned, by selecting one of the compensation rotational shafts to be rotated with a synchronous motor, the dynamic balance testing machine can easily be ready for the unbalance measurement of different kinds of asymmetrical crank shafts.

In the arrangements of the above-mentioned embodiments, the compensation rotational shaft 10 is rotatably held by the supporting bearings 12 fitted to the vibration cradle 1. However, the compensation rotational shaft may not be held by the supporting bearings 12, but may be rotatably received on bearing rollers and rotated via bearing rollers, similarly to the asymmetrical crank shaft as a test piece. With such arrangements, in a case where the kind of an asymmetrical crank shaft of which unbalance is measured changes, it is only necessary to exchange the compensation rotational shaft mounted on the bearing rollers with another one according to the change. Thus, the set-up can easily be altered.

In the above-mentioned embodiments, the test piece is an asymmetrical crank shaft. However, the test piece is not limited to an asymmetrical crank shaft, but it may be other test pieces having a moment (so-called a free moment) due to its predetermined dynamic unbalance.

The present invention is not limited to the above-mentioned embodiments but may be variously changed within the range of the appended claims.

### Reference Numerals

- 1: vibration cradle
- 2: supporting springs
- 3, 3': a pair of supports
- 4, 4': a pair of bearing rollers
- 5: test piece (asymmetrical crank shaft)
- 6, 6': vibration detectors
- 8: drive motor
- 9: synchronous motor
- 10: compensation rotational shaft
- 11: compensation weights
- 13: light emitting element
- 14: light receiving element
- 18: (13, 14) optical sensor
- 51: crank pin

## Claims

1. A dynamic balance testing machine comprising:
a vibration cradle (1) provided in such a manner that the cradle (1) can be vibrated corresponding to the unbalance when an unbalance of a test piece (5) is measured,
a test piece driving device provided in the vibration cradle (1) and having a rotation shaft for rotating the test piece (5) of which unbalance is measured,
a compensation rotational shaft (10) provided in the vibration cradle (1), having a rotational shaft positioning (12) on the same line or on a line parallel to the rotational axial center of the test piece (5), and having a compensation weight (11) provided for the rotational shaft, wherein the compensation weight (11) is adapted to generate when rotated by the rotational shaft (10) a vibration for canceling out the vibration generated in the cradle (1) at rotation of the test piece (5), due to a predetermined unbalance of the test piece (5), and
a compensation rotational shaft driving means (9) provided for the vibration cradle (1) for rotating the compensation rotational shaft (10) in such a manner that the test piece (5) and the compensation rotational shaft (10) are synchronously rotated, **characterized in that**
the test piece driving device (8, M1) and the compensation rotational shaft driving means (9, M2) which is separate from the test piece driving device (8, M1) are attached to the vibration cradle, and
a synchronous control circuit (21) is provided for controlling the compensation rotational shaft driving means (9, M2) such that its rotational speed and its rotational phase coincide with those of the test piece.

2. A dynamic balance testing machine according to claim 1, wherein the test piece driving device is applicable to rotate plural test pieces of different kinds or shapes for measuring the unbalance thereof,
the compensation rotational shaft has plural compensation rotational shafts (10, 101, 102, 103) corresponding to the kinds or shapes of the test pieces (5) of which unbalance is measured, and
the compensation rotational shaft driving means (9, 91, 92) is applicable to selectively rotate one of the plural compensation rotational shafts (10, 101, 102, 103), corresponding to a test piece (5) of which unbalance is measured.

3. A dynamic balance testing machine according to claim 2, wherein the compensation rotational shaft driving means (9, 91, 92) has each driving means separately provided for every compensation rotational shaft (10, 101, 102, 103).

4. A dynamic balance testing machine according to any one of claims 1 to 3, comprising
means for outputting a reference signal every time when a predetermined portion of the test piece (5) went through one-rotation carried out by the test piece driving means, wherein
the compensation rotational shaft driving means (9) is controllable based on the reference signal for rotating the compensation rotational shaft (10) synchronously with the reference signal.

5. A dynamic balance testing machine according to claim 4, wherein the test piece (5) is a crank shaft, and the reference signal outputting means comprises an optical sensor (18) for outputting a sensor light intersecting the rotational locus of a crank pin (51) of the crank shaft to output a reference signal based on the interruption of the sensor light caused by the rotating crank pin (51).

6. A dynamic balance testing machine according to claim 5, wherein the reference signal outputting means is operable to output, as the reference signal, the midst interruption of a duration in which the sensor light is interrupted by the crank pin (51).

## Patentansprüche

1. Maschine zum Testen eines dynamischen Gleichgewichts, umfassend:
eine Vibrationswiege (1), die derart vorgesehen ist, dass die Wiege (1) entsprechend dem Ungleichgewicht in Schwingungen versetzt werden kann, wenn ein Ungleichgewicht eines Prüfstücks (5) gemessen wird;
eine Prüfstückantriebseinrichtung, die in der Vibrationswiege (1) vorgesehen ist und eine Rotationswelle aufweist, um das Prüfstück (5) zu drehen, dessen Ungleichgewicht gemessen wird;
eine in der Vibrationswiege (1) vorgesehene Kompensationsrotationswelle (10) mit einer Rotationswellenpositionierung (12) auf der gleichen Linie oder einer Linie parallel zur Rotationsachsenmitte des Prüfstücks (5) und einem für die Rotationswelle vorgesehenen Kompensationsgewicht (11), wobei das Kompensationsgewicht (11) ausgelegt ist, beim Drehen durch die Rotationswelle (10) eine Schwingung zu erzeugen zum Aufheben der in der Wiege (1) beim Drehen des Prüfstücks (5) erzeugten Schwingung, die auf ein vorbestimmtes Ungleichgewicht des Prüfstücks (5) zurückzuführen ist, und
ein Kompensationsrotationswellen-Antriebsmittel (9), vorgesehen für die Vibrationswiege (1), zum Drehen der Kompensationsrotationswelle (10) derart, dass
das Prüfstück (5) und die Kompensationsrotationswelle (10) synchron gedreht werden, **dadurch gekennzeichnet, dass**
die Prüfstückantriebseinrichtung (8, M1) und das Kompensationsrotationswellen-Antriebsmittel (9, M2), das von der Prüfstückantriebseinrichtung (8, M1) getrennt ist, an der Vibrationswiege angebracht sind und
eine Synchronsteuerschaltung (21) vorgesehen ist zum Steuern des Kompensationsrotationswellen-Antriebsmittels (9, M2) derart, dass seine Drehzahl
und seine Drehphase mit jenen des Prüfstücks übereinstimmen.

2. Maschine zum Testen eines dynamischen Gleichgewichts nach Anspruch 1, wobei die Prüfstückantriebseinrichtung angewendet werden kann, mehrere Prüfstücke unterschiedlicher Arten oder Gestalten zu drehen, um deren Ungleichgewicht zu messen,
wobei die Kompensationsrotationswelle mehrere Kompensationsrotationswellen (10, 101, 102, 103) entsprechend den Arten oder Gestalten der Prüfstücke (5), deren Ungleichgewicht gemessen werden sollen, aufweist und das
Kompensationsrotationswellen-Antriebsmittel (9, 91, 92) anwendet werden kann, um eine der mehreren Kompensationsrotationswellen (10, 101, 102, 103) entsprechend einem Prüfstück (5), dessen Ungleichgewicht gemessen werden soll, selektiv zu drehen.

3. Maschine zum Testen eines dynamischen Gleichgewichts nach Anspruch 2, wobei das Kompensationsrotationswellen-Antriebsmittel (9, 91, 92) jeweils separat für jede Kompensationsrotationswelle (10, 101, 102, 103) vorgesehene Antriebsmittel aufweist.

4. Maschine zum Testen eines dynamischen Gleichgewichts nach einem der Ansprüche 1 bis 3, umfassend:
Mittel zum Ausgeben eines Referenzsignals immer dann, wenn ein vorbestimmter Abschnitt des Prüfstücks (5) durch eine von dem Prüfstückantriebsmittel durchgeführte Drehung ging, wobei
das Kompensationsrotationswellen-Antriebsmittel (9) zum synchronen Drehen der Kompensationsrotationswelle (10) mit dem Referenzsignal auf der Basis des Referenzsignals gesteuert werden kann.

5. Maschine zum Testen eines dynamischen Gleichgewichts nach Anspruch 4, wobei das Prüfstück (5) eine Kurbelwelle ist und das Referenzsignal-Ausgabemittel einen optischen Sensor (18) umfasst zum Ausgeben eines den Drehort eines Kurbelzapfens (51) der Kurbelwelle schneidenden Sensorlichts, um auf der Basis der Unterbrechung des Sensorlichts, verursacht durch den sich drehenden Kurbelzapfen (51), ein Referenzsignal auszugeben.

6. Maschine zum Testen eines dynamischen Gleichgewichts nach Anspruch 5, wobei das Referenzsignal-Ausgabemittel betrieben werden kann, um als das Referenzsignal die mittlere Unterbrechung einer Dauer auszugeben, in der das Sensorlicht von dem Kurbelzapfen (51) unterbrochen wird.

## Revendications

1. Machine pour contrôler l'équilibre dynamique comprenant
un berceau vibrant (1) conçu de telle sorte que le berceau (1) peut être mis en vibration correspondant au déséquilibre apparaissant lors de la mesure du déséquilibre d'une pièce à contrôler (5),
un dispositif d'entraînement pour la pièce à contrôler prévu dans le berceau vibrant (1) et ayant un arbre rotatif pour faire tourner la pièce à contrôler (5) dont le déséquilibre est mesuré,
un arbre rotatif de compensation (10) prévu dans le berceau vibrant (1), ayant un arbre rotatif (12) positionné sur la même ligne ou sur une ligne parallèle au centre axial de rotation de la pièce à contrôler (5) et ayant un poids de compensation (11) prévu pour l'arbre rotatif, dans lequel le poids de compensation (11) est conçu pour générer une vibration lorsqu'il est mis en rotation par l'arbre rotatif (10), ladite vibration compensant la vibration générée dans le berceau (1) lors de la rotation de la pièce à contrôler (5) laquelle est due à un déséquilibre prédéterminé de la pièce à contrôler (5), et
des moyens d'entraînement pour l'arbre rotatif de compensation (9) prévu pour le berceau de vibration (1) pour entraîner en rotation l'arbre rotatif de compensation (10) de telle sorte que la pièce à contrôler (5) et l'arbre rotatif de compensation (10) sont entraînés en rotation de manière synchrone,
**caractérisée en ce que**
les moyens d'entraînement pour la pièce à contrôler (8, M1) et les moyens d'entraînement de l'arbre rotatif de compensation (9, M2), lesquels sont différents des moyens d'entraînement de la pièce à contrôler (8, M1), sont attachés au berceau vibrant, et
un circuit de contrôle synchrone (21) est prévu pour contrôler les moyens d'entraînement de l'arbre rotatif (9, M2) de telle sorte que sa vitesse de rotation et sa phase de rotation coïncident avec ceux de la pièce à contrôler.

2. Machine pour contrôler l'équilibre dynamique selon la revendication 1, dans laquelle les moyens d'entraînement de la pièce à contrôler sont aptes à entraîner en rotation plusieurs pièces à contrôler de type ou de taille différents pour mesurer le déséquilibre de celles-ci,
l'arbre rotatif de compensation a plusieurs arbres rotatifs de compensation (10, 101, 102, 103) correspondant aux types ou tailles des pièces à contrôler (5) dont le déséquilibre est mesuré,
les moyens d'entraînement de l'arbre rotatif de compensation (9, 91, 92) sont aptes à entraîner sélectivement en rotation un ou plusieurs arbres rotatifs de compensation (10, 101, 102, 103) appartenant à la pièce à contrôler (5) dont le déséquilibre est mesuré.

3. Machine pour contrôler l'équilibre dynamique selon la revendication 2, dans laquelle les moyens d'entraînement de l'arbre rotatif de compensation (9, 91, 92) ont des moyens d'entraînement qui sont prévus séparément pour chaque arbre rotatif de compensation (10, 101, 102, 103).

4. Machine pour contrôler l'équilibre dynamique selon l'une des revendications 1 à 3, comprenant
des moyens pour délivrer un signal de référence à chaque fois qu'une partie prédéterminée de la pièce à contrôler (5) a subi une rotation réalisée par les moyens d'entraînement de la pièce à contrôler, dans laquelle
les moyens d'entraînement de l'arbre rotatif de compensation (9) peuvent être réglés sur la base du signal de référence pour entraîner en rotation l'arbre rotatif de compensation (10) de façon synchronisée avec le signal de référence.

5. Machine pour contrôler l'équilibre dynamique selon la revendication 4, dans laquelle la pièce à contrôler (5) est un vilebrequin, et les moyens pour délivrer un signal de référence comprennent un capteur optique (18) pour fournir une lumière de détection croisant le chemin de rotation d'un maneton (51) du vilebrequin pour délivrer un signal de référence basé sur l'extinction de la lumière de détection suite au passage du maneton (51).

6. Machine pour contrôler l'équilibre dynamique selon la revendication 5, dans laquelle les moyens pour délivrer un signal de référence sont aptes à délivrer, en tant que signal de référence, l'interruption moyenne d'une durée correspondant à celle durant laquelle la lumière de détection est interrompue par le maneton (51).
